# EUROPEAN PATENT APPLICATION

(11) **EP 1 503 591 A2**
(43) Date of publication of application: **02.02.2005**
(21) Application number: 04010314.5
(22) Date of filing: 30.04.2004
(51) Int. Cl.: H04N 7/173, H04N 7/24

(54) **Device for separating a Single Program Transport Stream from a Multiple Program Transport Stream**

(30) Priority: 31.07.2003 KR 2003053136
(71) Applicant: Samsung Electronics Co., Ltd., Suwon-si, Gyeonggi-do (KR)
(72) Inventor: Kim, Yong-Deok, Suwon-si Gyeonggi-do (KR); Koh, Jun-Ho, Suwon-si Gyeonggi-do (KR); Oh, Yun-Je, Suwon-si Gyeonggi-do (KR)
(74) Representative: Grünecker, Kinkeldey, Stockmair & Schwanhäusser Anwaltssozietät

(57) **Abstract**

An MPTS-SPTS (Multiple Program Transport Stream - Single Program Transport Stream) separation device (100) in a digital broadcasting system includes a receiving interface (110), an MPTS-SPTS separator (120), and a transmitting interface (140). The separator detects a PAT (Program Association Table) packet from among MPEG-2 MPTS packets from a digital broadcast program provider, analyzes PIDs (Program IDs) that correspond respectively to a plurality of programs in an MPEG-2 MPTS packet, receives information of a single program selected by a user, removes packets associated with programs other than the selected program, deletes from the PAT PIDs associated with the other programs, and inserts the changed PAT into a stream corresponding to the selected program.

## Description

The present invention relates to a digital broadcasting system for providing digital broadcasting services, and more particularly to the processing of an MPTS (Multiple Program Transport Stream) in a digital broadcasting system.

Among the disadvantages of conventional analog broadcasting are degradation of image quality due to noise, ghosts, etc., the inefficient utilization of broadcast frequency resources, and the inability to provide an integrated data service. As consumers demand higher image and product quality, digital broadcasting technology has been rapidly developed to meet the demand.

Digital broadcasting, such as that using an MPEG-2 TS (Transport Stream) in video/audio data transmission, features as one of its most important advantages the ability to transmit broadcasts of a larger number of channels through the existing transmission medium. For example, the conventional analog broadcasting in the Korean terrestrial broadcasting employs a VSB (Vestigial Sideband) scheme according to the American NTSC (National Television System Committee) specifications, while the digital broadcasting employs an 8-VSB scheme according to the American ATSC (Advanced Television Systems Committee) specifications. Both the schemes are similar in that an RF spectrum band of 6 MHz is used for one physical channel. However, the former scheme can carry only a single SD (Standard Definition)-level TV signal, whereas the latter scheme can carry 4 to 6 SD-level TV signals or a single HD (High Definition)-level TV signal with additional data for data broadcasting.

In such digital broadcasting systems, the broadcast channel signals are combined and formatted into an MPTS (Multiple Program Transport Stream) to be suitable for a cable network, in which a TDM (Time Division Multiplexing) technique is used to transmit multimedia data according to the MPEG-2 standard.

The amount of MPTS data produced is proportional to the number of programs and occupies a large amount of bandwidth during transmission through a wired transmission medium such as a cable or an optical fiber. If only one program is needed, the system wastes an amount of bandwidth several times larger than a single program transmission. Thus, there is a need to provide an SPTS (Single Program Transport Stream) to the subscriber. A conventional remux can be used to separate an SPTS from the MPTS, but is high-priced, making it infeasible for a practical digital cable broadcasting system having tens to hundreds of channels.

IT is the object of the present invention to provide an MPTS-SPTS separation device which makes it possible to separate an SPTS from an MPTS at a small-sized SO (System Operator) or an ONU (Optical Network Unit) without unnecessary bandwidth waste or without employing high-priced broadcast equipment.

This object is solved by the subject matters of the independent claims.

Preferred embodiments are defined in the dependent claims.

In accordance with the present invention, the above and other objects can be accomplished by the provision of an MPTS-SPTS (Multiple Program Transport Stream - Single Program Transport Stream) separation device in a digital broadcasting system. The device includes a receiving interface for receiving an MPEG-2 MPTS (Multiple-Program Transport Stream) formed by combining a plurality of programs and provided from a digital broadcast program provider. The device further includes an MPTS-SPTS separator for a) detecting a PAT (Program Association Table) packet from among MPEG-2 MPTS data provided from the receiving interface, b) analyzing PIDs (Program IDs) of a PMT (Program Map Table) that correspond respectively to a plurality of programs existing in an MPEG-2 MPTS packet, c) receiving information of a single program selected by a user, d) removing packets associated with all programs other than the selected program, e) deleting from a PAT PIDs associated with those other programs, while retaining PIDs associated with the selected program, and f) inserting the changed PAT into a stream corresponding to the selected single program. The device also includes a transmitting interface for transmitting an SPTS outputted from the MPTS-SPTS separator.

The above features and other advantages of the present invention will be more clearly understood from the following detailed description taken in conjunction with the accompanying drawings, in which:
Fig. 1 is a block diagram showing the configuration of a wired cable system as a broadcast transmission system to which the present invention is applied;
Fig. 2 is a block diagram showing the configuration of an AON (Active Optical Network) as a broadcast transmission system to which the present invention is applied;
Fig. 3 is a block diagram showing the configuration of an MPTS-SPTS separation device according to a preferred embodiment of the present invention;
Fig. 4 is a block diagram showing the configuration of the MPTS-SPTS separator of Fig. 3 according to the preferred embodiment of the present invention; and
Fig. 5 illustrates the overhead section of an MPEG-2 MPTS packet.

Now, preferred embodiments of the present invention will be described in detail with reference to the annexed drawings. In the following description, detailed description of known functions and configurations incorporated herein will be omitted for clarity of presentation.

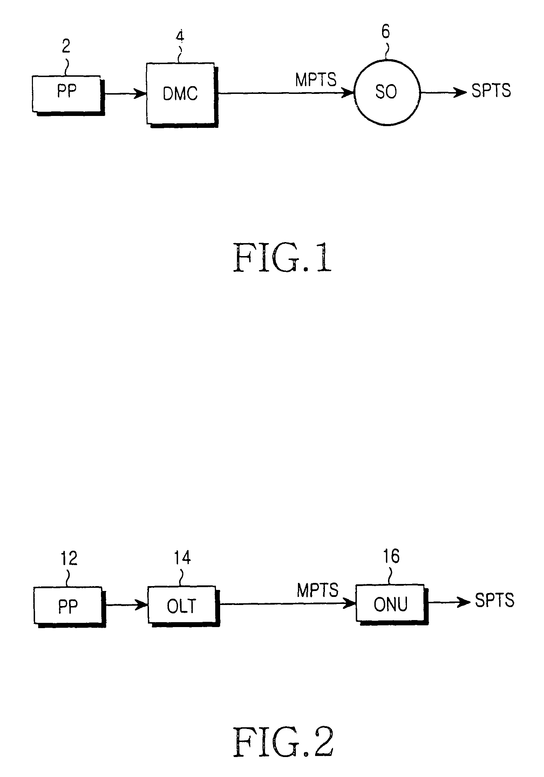

Figs. 1 and 2 are block diagrams showing the configuration of a wired cable system and an AON (Active Optical Network), respectively, each being a broadcast transmission system to which the present invention may be applied.

As shown in Fig. 1, the wired cable system includes a program provider (PP) 2, a digital media center (DMC) 4, a CATV (cable television) broadcast station (or system operator (SO)) 6, and a number of subscribers (not shown). Being a service provider for providing broadcast programs to cable television (CATV) carriers, the program provider 2 can provide specialized programs on a channel-by-channel basis via a communications satellite. Broadcasts such as VOD (Video on Demand), aerial, and satellite broadcasts are provided by the program provider 2. The digital media center 4 is a large-sized digital transmission center where digital broadcasting equipment is concentrated, and which broadcasts programs from the program provider 2 to a number of CATV broadcast stations digitally. Although Fig. 1 shows a single CATV broadcast station 6 connected to the digital media center 4, a plurality of CATV broadcast stations installed respectively in a plurality of regions may be connected to the digital media center 4. The CATV broadcast station 6 receives program channel signals from the digital media center 4 and provides them to its CATV subscribers.

Referring to Fig. 2, the AON is configured to provide a number of point to point connections such that a number of ONUs (Optical Network Units) 16 share an OLT (Optical Line Termination) 14 through their own optical fiber. In order to provide digital broadcast services in such an optical network, the OLT 14 combines digital broadcast data received from broadcast service providers 12 into a single optical signal after electro-optical conversion, and transmits it to each of the ONUs 16, and each ONU 16 transfers information received from the OLT 14 to subscribers.

The MPTS-SPTS separation device according to the present invention is installed in each of the CATV broadcast stations 6 and the OLT 14, and converts an MPTS containing a number of programs into an SPTS containing a single program, so as to provide only a required program to each subscriber. The present invention can thus be applied to a small-sized system operator or an ONU.

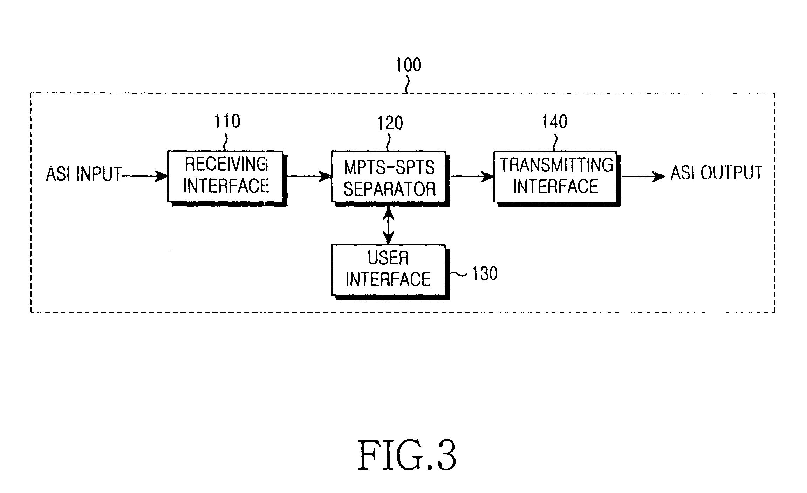

Fig. 3 is a block diagram showing an MPTS-SPTS separation device according to a preferred embodiment of the present invention. The MPTS-SPTS separation device 100 includes a receiving (or Rx) interface 110, an MPTS-SPTS separator 120, a user interface 130, and a transmitting (or Tx) interface 140. The receiving interface 110 receives an ASI (Asynchronous Serial Interface) input, which is MPEG-2 MPTS data received according to the DVB (Digital Video Broadcasting)-ASI standard. After receiving data at a transfer rate of 270 Mbps, including stuffing characters according to physical layer specifications, the receiving interface 110 removes the characters to transfer only pure MPEG-2 data to the MPTS-SPTS separator 120. The MPEG-2 data is provided from the receiving interface 110 to the MPTS-SPTS separator 120 in an 8 bit parallel fashion. The MPTS-SPTS separator 120 can be implemented with a simplified hardware structure using a low priced FPGA (Field Programmable Gate Array). The MPTS-SPTS separator 120 separates an SPTS from the MPEG-2 MPTS data, and transfers MPEG-2 data of the separated SPTS to the transmitting interface (or a Tx Interface) 140. In detail, the MPTS-SPTS separator 120 detects a PAT (Program Association Table) packet in the MPEG-2 MPTS data provided from the receiving interface 110, i.e. identifies as a PAT packet one of the MPEG-2 MPTS packets, and analyzes PIDs (Program IDs) of a PMT (Program Map Table) that correspond respectively to a plurality of programs existing in the identified MPEG-2 MPTS packet. The separator 120 receives information of a single program selected by the user, and removes packets associated with all programs other than the selected program. The MPTS-SPTS separator 120 changes the PAT by deleting PIDs associated with those other programs in the PAT, while retaining the PIDs associated with the selected program, and inserts the changed PAT into a stream corresponding to the selected single program. During this procedure, the separator 120 provides the MPEG-2 data to the transmitting interface 140 in an 8 bit parallel fashion. The transmitting interface 140 carries the MPEG-2 data on a physical layer according to the specifications for conformance with other broadcasting equipment, and outputs it as DVB-ASI data. Further, the separator 120 exchanges a signal with the user interface 130 through an UART (Universal Asynchronous Receiver/Transmitter) so as to allow the user to select a program. The user interface 130 permits the user to select one of a plurality of programs included in the MPTS. It is thus preferable that the user interface 130 is a GUI (Graphic User Interface).

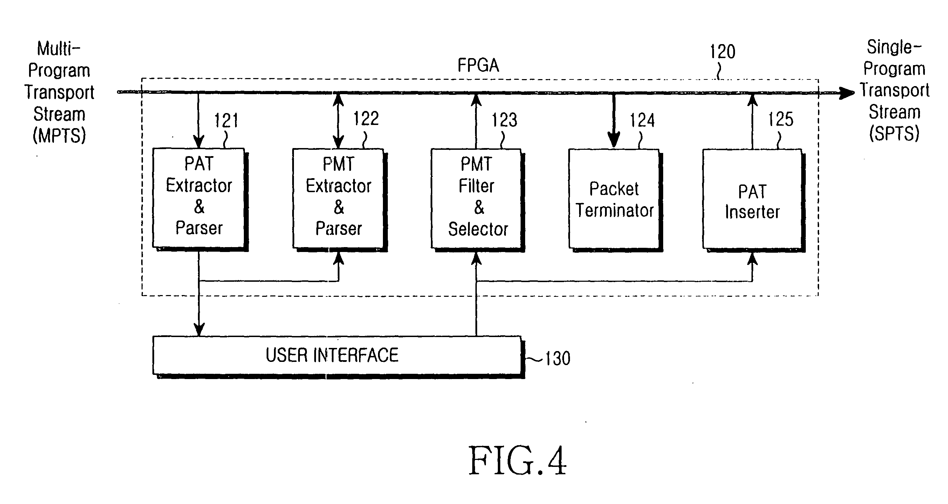

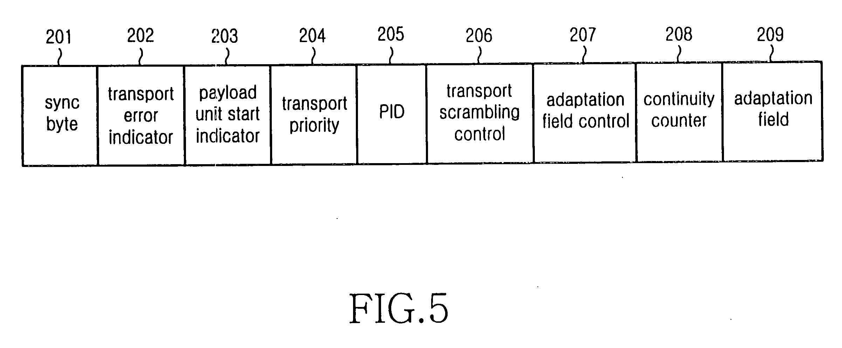

Fig. 4 is a block diagram showing an MPTS-SPTS separator 120 according to the preferred embodiment of the present invention. As shown in this figure, the MPTS-SPTS separator 120 includes a PAT extractor/parser 121, a PMT extractor/parser 122, a PMT filter/selector 123, a packet terminator 124, and a PAT inserter 125. The PAT extractor/parser 121 receives MPTS packets, each being composed of 188 bytes, from the receiving interface 110. A 4-byte overhead section, other than a 184-byte payload section, of the MPTS packet is illustrated in Fig. 5.

As shown in this figure, the overhead 200 of the MPTS packet includes a sync byte 201 used for random access to the stream, a transport error indicator 202, a payload unit start indicator 203, a transport priority 204, a packet ID (PID) 205, a transport scrambling control 206, an adaptation field control 207, a continuity counter 208, and an adaptation field 209. It can be seen from the PID 205 of 13 bits as a packet identifier which data is carried in the payload of the 188-byte MPEG-2 packet.

The MPEG-2 packet includes a PSI (Program Specific Information) according to the international standard. The conventional analog broadcast can be received only through a channel selection in a tuner, whereas the MPEG-2 broadcast can be received through two operations, i.e., a channel selection in a tuner and a packet assignment in a separator. The PSI provides information needed for selecting a channel desired by the user. The PSI includes a PAT (Program Association Table), a PMT (Program Map Table), an NIT (Network Information Table), a CAT (Conditional Access Table), etc. The PAT extractor/parser 121 detects a PAT packet from the MPEG-2 MPTS data. With reference to the PID (Packet Identification) 205 in the overhead 200 of the MPTS packet, the PAT extractor/parser 121 identifies whether it is a PAT packet. For example, if the PID 205 is 0x00, it is a PAT packet.

In addition, the PAT extractor/parser 121 provides the analysis result of the MPEG-2 MPTS packet to the PMT extractor/parser 122, and also provides it to the user interface 130 so as to display the information on the MPEG-2 packet. Since information both on the number of programs included in the MPTS and on the PIDs (Program IDs) of a PMT as a reference for each of the programs has been recorded in the PAT, the user can select one of a plurality of programs displayed on the user interface 130. That is, such information is displayed on the user interface 130 to allow the user to select one of a plurality of programs. The user interface 130 is connected to the PAT extractor/parser 121 through a UART (Universal Asynchronous Receiver/Transmitter), an RS-232, or the like. The user interface may be any device if it can display the information on the MPEG-2 packet, such as an LCD (Liquid Crystal Display) or a CRT monitor of a general computer.

The PMT extractor/parser 122 analyzes the PIDs (Program IDs) of a PMT that correspond respectively to a plurality of programs existing in an MPEG-2 MPTS packet, and provides the analysis result to the PMT filter/selector 123. The PMT filter/selector 123 receives information of a single program the user selects through the user interface 130. The PMT includes PID (Program ID) values of video, audio, data packets, etc., that belong to the corresponding program. With reference to the PIDs belonging to a program the user selects through the user interface 130, the PMT filter/selector 123 allows the packet terminator 124 to remove packets associated with all programs other than the selected program. The packet terminator 124 filters out packets corresponding to the programs not selected and provides a stream corresponding to the selected single program to the PAT inserter 125. The packet inserter 125 changes the PAT by deleting PIDs associated with all programs, other than the selected program, from the PAT table included in the PSI, while retaining the PIDs associated with the selected program. The packet inserter 125 then inserts the changed PAT into a stream corresponding to the selected single program.

It will be apparent to those skilled in the art that a plurality of MPTS-SPTS separation devices 100 according to the present invention may be provided, as an alternative embodiment of the present invention, in the case of separating one or more SPTSs from MPTS MPEG-2 data containing a plurality of programs.

In the rapidly changing and developing digital broadcast and VOD (Video On Demand) service markets, wherein a large amount of content is produced in an MPTS format that takes advantage of the MPEG-2 system standard, the MPTS may waste storage space and transmission bandwidth since it is inherently larger in size than the SPTS. To avoid such a waste of resources, a remux may be used as broadcasting equipment to separate an MPTS back into SPTSs. However, it is infeasible for a system operator, a relay wired-broadcast service provider, or an ONU at the subscriber end to practically use the remux because it is very expensive. This disadvantage is more obvious when taking into consideration that the current trend of digital broadcasts is toward multi-channel digital broadcasts designed to meet customer preferences. The present invention thus provides an MPTS-SPTS separation device suitable for use in a small-sized rebroadcasting service provider or an ONU as described above, whereby it is possible to avoid immense budget waste due to the use of the remux and an additional loss due to the unnecessary occupancy of link bandwidths.

From a technical viewpoint, the conventional remux has a disadvantage in that it must use a Pentium-level processor, using relatively slow software, or a network-dedicated processor, which inevitably entails either unnecessary time delay or price increase. On the contrary, in an MPTS-SPTS separation device according to the present invention, the only required hardware is a single low-priced FPGA (Field Programmable Gate Array), and there is no need to employ such a processor or software data processing. Accordingly, the present invention can effectively separate a single program from a number of programs in an MPTS without the associated time delay of the prior art.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A multiple program transport stream - single program transport stream separation device in a digital broadcasting system, comprising:
a receiving interface for receiving an MPEG-2 multiple-program transport stream combining a plurality of programs, provided from a digital broadcast program provider;
a multiple program transport stream - single program transport stream separator for a) detecting a program association table packet from MPEG-2 multiple program transport stream data provided from the receiving interface, b) analyzing program IDs of a program map table that correspond respectively to a plurality of programs existing in an MPEG-2 multiple program transport stream packet, c) receiving information of a single program selected by a user, d) removing packets associated with all programs other than the selected program, e) changing a program association table by deleting program IDs associated with said other programs from the program association table, while retaining program IDs of a program map table that are associated with the selected program, and f) inserting the changed program association table into a stream corresponding to the selected single program; and
a transmitting interface for transmitting a single program transport stream outputted from the multiple program transport stream - single program transport stream separator.

2. The multiple program transport stream - single program transport stream separation device as set forth in claim 1, wherein the multiple program transport stream - single program transport stream separator includes:
a program association table extractor/parser for detecting a program association table packet in the MPEG-2 multiple program transport stream data provided from the receiving interface;
a program map table extractor/parser for analyzing program IDs of a program map table that correspond respectively to a plurality of programs existing in an MPEG-2 packet;
a program map table filter/selector for receiving information of a single program selected by a user;
a packet terminator for removing packets associated with all programs other than the selected program; and
a program association table inserter for changing the program association table by deleting program IDs associated with said other programs from the program association table, while retaining said program IDs of a program map table that are associated with the selected program, and inserting the changed program association table into a stream corresponding to the selected single program.

3. The multiple program transport stream - single program transport stream separation device as set forth in claim 2, wherein the program association table extractor/parser refers to a packet identification in an overhead section of the multiple program transport stream packet, so as to identify whether the multiple program transport stream packet is a program association table packet.

4. The multiple program transport stream - single program transport stream separation device as set forth in claim 2 or 3, further comprising a user interface for receiving and displaying an analysis result of the MPEG-2 multiple program transport stream packet from the program association table extractor/parser, and, when receiving information of said single program, providing the information to the program map table filter/selector.

5. The multiple program transport stream - single program transport stream separation device as set forth in claim 4, wherein the multiple program transport stream - single program transport stream separator is implemented with a field programmable gate array.

6. The multiple program transport stream - single program transport stream separation device as set forth in claim 4 or 5, wherein the user interface includes any one of an LCD and a CRT monitor of a general computer.

7. The multiple program transport stream - single program transport stream separation device as set forth in one of claims 1 to 6, wherein the multiple program transport stream - single program transport stream separator is implemented with an integrated circuit.

8. The multiple program transport stream - single program transport stream separation device as set forth in claim 7, wherein the multiple program transport stream - single program transport stream separator is implemented with a field programmable gate array.

9. The multiple program transport stream - single program transport stream separation device as set forth in one of claims 1 to 8, wherein the multiple program transport stream - single program transport stream separation device is installed in a cable TV broadcast station of a wired cable system.

10. The multiple program transport stream - single program transport stream separation device as set forth in one of claims 1 to 8, wherein the multiple program transport stream - single program transport stream separation device is installed in an optical line termination of an active optical network.

11. The multiple program transport stream - single program transport stream separation device as set forth in one of claims 1 to 5, wherein the packets removed are video, audio or data packets.

12. The multiple program transport stream - single program transport stream separation device as set forth in one of claims 1 to 5, said device being part of a cable television broadcast station that receives at least one of video on demand, aerial and satellite broadcasts.

13. The multiple program transport stream - single program transport stream separation device as set forth in one of claims 1 to 5, said device being part of an optical line termination that receives at least one of video on demand, aerial and satellite broadcasts.

14. A multiple program transport stream - single program transport stream separation method adapted to operate the multiple program transport stream - single program transport stream separation device according to one of claims 1 to 13.
